(19) Europäisches Patentamt

European Patent Office

Office européen des brevets

(11) EP 0 561 479 B1

(12) **EUROPEAN PATENT SPECIFICATION**

(45) Date of publication and mention
of the grant of the patent:
**13.11.1996 Bulletin 1996/46**

(51) Int Cl.6: **C07F 17/00**, C08F 10/00,
C08F 4/76

(21) Application number: **93201185.1**

(22) Date of filing: **27.01.1988**

(54) **Catalysts, method of preparing these catalysts and method of using said catalysts**

Katalysatoren, Verfahren zur Herstellung derselben und Verfahren zur deren Anwendung

Catalyseurs, méthode de préparation de ces catalyseurs et procédé d'utilisation

(84) Designated Contracting States:
**AT BE DE ES FR GB IT LU NL SE**

(30) Priority: **30.01.1987 US 8800**

(43) Date of publication of application:
**22.09.1993 Bulletin 1993/38**

(62) Application number of earlier application in
accordance with Art. 76 EPC: **91113752.9**

(73) Proprietor: **EXXON CHEMICAL PATENTS INC.**
**Linden, New Jersey 07036-0710 (US)**

(72) Inventors:
• **Turner, Howard William**
**Houston, Texas 77059 (US)**
• **Hlatky, Gregory George**
**Houston, Texas 77062 (US)**

(74) Representative:
**Veldhuizen, Albert Dirk Willem et al**
**Exxon Chemical Limited**
**Exxon Chemical Technology Centre**
**PO Box 1**
**Abingdon Oxfordshire OX13 6BB (GB)**

(56) References cited:
• **J. AM. CHEM. SOC., vol. 108, 1986, pages**
**1718-1719, American Chemical Society; R.F.**
**JORDAN et al.: "Reactive cationic**
**dicyclopentadienylzirconium(IV) complexes"**
• **J. AM. CHEM. SOC., vol. 108, 1986, pages**
**7410-7411, American Chemical Society; R.F.**
**JORDAN et al.: "Ethylene polymerization by a**
**cationic dicyclopentadienylzirconium(IV) alkyl**
**complex"**
• **J. CHEM. SOC., CHEM. COMMUN., 1986, pages**
**1610-1611; M. BOCHMANN et al.: "Synthesis and**
**insertion reactions of cationic**
**alkylbis(cyclopentadienyl)titanium complexes"**

**Description**

This invention relates to preparing catalysts for polymerizing olefins diolefins and/or acetylenically unsaturated monomers and is a divisional application from european application No 91113752.9

BACKGROUND OF INVENTION

Articles such as those by Breslow and Newburg, and Long and Breslow (J. Am. Chem. Soc. 1959 Vol. 81, pp 81-86, and J. Am. Chem. Soc. 1960 Vol. 82 1953-1957); by Dyachkovskii (Vysokomol. Soyed., 1965, Vol. 7, pp. 114-115) and by Dyachkovskii, Shilova and Shilov (J. Polym. Sci., Part C, 1967, pp. 2333-2339) teach or suggest that the active catalyst species for olefin polymerisation is an ion pair and in particular an ion pair wherein the Group IV-B metal component is present as a cation or a decomposition product thereof and as a cocatalyst a Lewis acid either to form or to stabilise the active ionic catalyst species. The active catalyst is, apparently, formed through a Lewis acid-Lewis base reaction of two neutral components (the metallocene and the aluminum alkyl), leading to an equilibrium between a neutral, apparently inactive, adduct and an ion pair, presumably the active catalyst. As a result of this equilibrium, there is a competition for the anion which must be present to stabilise the active cation catalyst species. This equilibrium is, of course, reversible; and such reversal will deactivate the catalyst. Many, if not all, of the Lewis acids heretofore contemplated for use in soluble Ziegler-Natta type catalyst systems are chain transfer agents and, as a result, prevent effective control of the product polymer molecular weight and control distribution. Most, if not all, of the metal alkyl cocatalysts heretofore contemplated are highly pyrophoric and, as a result, hazardous to use.

Recently, it has been found (See EP 69951 and EP 129366) that active Ziegler-Natta type catalysts can be formed when bis(cyclopentadienyl)compounds of the Group IV-B metals, including zirconium and hafnium, are used with alumoxanes. These systems remain subject to poisoning when basic impurities are present and require an undesirable excess of the alumoxane to function efficiently.

The Journal of the Chemical Society, Chem. Comm., 1986, page 1610-11 described in an article by M. Bochmann and L.M. Wilson preparation of a compound [Cp$_2$Ti(CH$_3$)(CH$_3$CN)] [BPh$_4$] using Cp$_2$Ti(CH$_3$)Cl and BaBPh$_4$ in CH$_3$CN. [(Indenyl)$_2$Ti(CH$_3$)(RCN)] [BPh$_4$] is also mentioned. It is stated that none of the complexes react with ethylene, butadiene or acetylene under mild conditions in the absence or presence of Lewis acids.

The Journal of the American Chemical Society, 1986, Vol. 108, page 1718-1719 described in an article by R.F. Jordan, W.E. Dasher and S.F. Echols monometallic systems incorporating unreactive, non-coordinating anions involving the preparation of an ionic complex including Cp$_2$ZrR$^+$ using Ag[BPh$_4$] [Cp$_2$Zr(CH$_3$)(CH$_3$CN)] [BPh$_4$]. Ag° precipitates. CH$_3$CN could be replaced by tetrahydrofuran (THF) to form a stable complex. It was suggested that these cationic complexes could be reactive with polyolefins.

In the Journal of the American Chemical Society, Vol. 108, 1986, pages 7410-7411 R.F. Jordan, C.S. Bajgur, R. Willett and B. Scott describe use of [Cp$_2$Zr(CH$_3$)(THF)] [BPh$_4$] in ethylene polymerisation in the absence of Al cocatalyst. The purpose is to demonstrate the existence of Cp$_2$M(IV)R+ cations; labile ligands, presumably THF instead of CH$_3$CN, are used. CH$_2$Cl$_2$ solvent is used at 25°C and 1 to 4 atmosphere of ethylene to produce polyethylene typically having an Mw of 18400 Mz of 33000, an Mw/Mn of 2.58 at relatively low activity of 0.2 g/mmol catalyst min.atm. The THF ligand whilst labile is said to compete with ethylene. The THF and/or solvent CH$_2$Cl$_2$ act to stabilise the cation, the [BPh$_4$] does not act as a stabilising anion.

In light of the several deficiencies of the coordination catalyst systems heretofore contemplated, there is a need for an improved catalyst system which: is not subject to activation equilibrium and avoids the use of an undesirable cocatalyst.

It is a further object of this invention to provide such an improved catalyst which is not subject to ion equilibrium reversal. It is yet another object of this invention to permit preparation of such an improved catalyst which may be used with less risk of fire. It is even a further object of this invention to permit preparation of polymeric products produced with these catalysts having relatively narrow molecular weight distributions and which are free of certain metal impurities.

According to the invention there is provided the use, in the preparation of a catalyst for polymerisation of olefins, diolefins and/or acetylenically unsaturated monomers, of an anion of the formula [(M')$^{m+}$Q$_1$Q$_2$...Q$_n$]$^{d-}$ wherein:

M' is a metal or metalloid of Group V-B to VI A of the Periodic Table of Elements; i.e. Groups V-B; VI-B; VII-B; VIII; I-B; II-B; III-A-; IV-A and V-A;

Q$_1$ to Q$_n$ are selected independently from the Group consisting of hydride radicals, dialkylamido radicals, alkoxide and aryloxide radicals; hydrocarbyl and substituted hydrocarbyl radicals and organometalloid radicals and any one, but not more than one of the Q$_1$ to Q$_n$ may be a halide radical - the remaining Q$_1$ to Q$_n$ being independently selected from the foregoing radicals;

m is an integer from 1 to 7; n is an integer from 2 to 8; and n-m = d, the anion containing substituted aromatic carbons or being fluorine substituted so as to resist degradation.

The anion may be used to prepare novel catalysts comprising an ion pair not subject to activation equilibrium as described and claimed in EP 91113752.9, by combining at least two component. The first of which components is a bis(cyclopentadienyl) derivative of a Group IV-B metal compound containing at least one ligand which will combine with the second component or at least a portion thereof such as a cation protion thereof. The second of which components is an ion-exchange compound comprising a cation which will irreversibly react with at least one ligand contained in said Group IV-B metal compound (first component) and the anion referred to above which is a single coordination complex comprising a plurality of lipophilic radicals covalently coordinated to and shielding a central formally charge-bearing metal or metalloid atom, which anion is bulky, labile and stable to any reaction involving the cation of the second component. The charge-bearing metal or metalloid may be any metal or metalloid capable of forming a coordination complex which is not hydrolyzed by aqueous solutions. Upon combination of the first and second components, the cation of the second component reacts with one of the ligands of the first component, thereby generating an ion pair consisting of a Group IV-B metal cation with a formal coordination number of 3 and a valence of +4 and the aforementioned anion, which anion is compatible with and noncoordinating towards the metal cation formed from the first component. The anion of the second compound must be capable of stabilizing the Group IV-B metal cation complex without interfering with the Group IV-B metal cation's or its decomposition product's ability to function as a catalyst and must be sufficiently. labile to permit displacement by an olefin, diolefin or an acetylenically unsaturated monomer during polymerization. For example, Bochmann and Wilson have reported (J. Chem. Soc., Chem. Comm., 1986, pp. 1610-1611) that bis(cyclopentadienyl)titanium dimethyl reacts with tetrafluoroboric acid to form bis(cyclopentadienyl) titanium methyl tetrafluoroborate. The anion is, however, insufficiently labile to be displaced by ethylene.

DETAILED DESCRIPTION OF THE INVENTION

The catalysts resulting from the preparation using the anion are particularly useful for polymerizing $\alpha$-olefins, di-olefins and acetylenically unsaturated monomers either alone or in combination with other $\alpha$-olefins, diolefins and or other unsaturated monomers. The second ion exchange component may be a salt comprising a cation capable of donating a proton which will irreversibly combine with said at least one ligand (substituent) liberated by said Group IV-B metal compound and the anion.

All references to the Periodic Table of the Elements herein shall refer to the Periodic Table of the Elements, published and copyrighted by CRC Press, Inc., 1984. Also, any reference to a Group or Groups shall be to the Group or Groups as reflected in this Periodic Table of the Elements.

As used herein, the recitation "compatible noncoordinating anion" means an anion which either does not coordinate to said cation or which is only weakly coordinated to said cation thereby remaining sufficiently labile to be displaced by a neutral Lewis base. The recitation "compatible noncoordinating anion" specifically refers to an anion which when functioning as a stabilizing anion in the catalyst system of this invention does not transfer an anionic substituent or fragment thereof to said cation thereby forming a neutral four coordinate metallocene and a neutral metal or metalloid byproduct. Compatible anions are anions which are not degraded to neutrality when the initially formed complex decomposes. The recitation "metalloid", as used herein, includes non-metals such as boron and phosphorus which exhibit semi-metallic characteristics.

The Group IV-B metal compounds; i.e., titanium, zirconium and hafnium compounds, useful as first compounds in the preparation of the catalysts according to this invention are bis(cyclopentadienyl) derivatives of titanium, zirconium and hafnium. In general, useful titanium, zirconium and hafnium compounds may be represented by the following general formulae:

1. $(A\text{-}Cp)MX_1X_2$

2. $(A\text{-}Cp)MX'_1X'_2$

3. $(A\text{-}Cp)ML$

4. $(Cp^*)(CpR)MX_1$

Wherein:

M is a metal selected from titanium; zirconium or hafnium

(A-Cp) is either (Cp)(Cp*) or Cp-A'-Cp* and Cp and Cp∗ are the same or different substituted or unsubstituted cyclopentadienyl radicals wherein A' is a covalent bridging group which may contain a Group IV-A element;

M is is a metal selected from the Group consisting of titanium, zirconium and hafnium;

L is an olefin, diolefin or aryne ligand;

$X_1$ and $X_2$ are, independently, selected from the group consisting of hydride radicals, hydrocarbyl radicals, preferably having from 1 to 20 carbon atoms, substituted-hydrocarbyl radicals, wherein one or more of the hydrogen atoms are replaced with a halogen atom, preferably having from 1 to 20 carbon atoms, organometalloid radicals preferably comprising a Group IV-A element wherein each of the hydrocarbyl substitutions contained in the organic portion of said organometalloid, independently, contain from 1 to 20 carbon atoms;

$X'_1$ and $X'_2$ are joined and bound to the metal atom to form a metallacycle, in which the metal atom, $X'_1$ and $X'_2$ form a hydrocarbocyclic ring containing from 3 to 20 carbon atoms; and

R is a substituent, preferably a hydrocarbyl substituent, on one of the cyclopentadienyl radicals which is also bound to the metal atom.

Each carbon atom in the cyclopentadienyl radical may be, independently, unsubstituted or substituted with the same or a different radical selected from the group consisting of hydrocarbyl radicals, substituted-hydrocarbyl radicals wherein one or more hydrogen atoms is replaced by a halogen atom, hydrocarbyl-substituted metalloid radicals wherein the metalloid is selected from Group IV-A of the Periodic Table of the Elements, and halogen radicals. Suitable hydrocarbyl and substituted-hydrocarbyl radicals, which may be substituted for at least one hydrogen atom in the cyclopentadienyl radical, will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Similarly, and when $X_1$ and/or $X_2$ is a hydrocarbyl or substituted-hydrocarbyl radical, each may, independently, contain from 1 to 20 carbon atoms and be a straight or branched alkyl radical, a cyclic hydrocarbyl radical, an alkyl-substituted cyclohydrocarbyl radical, an aromatic radical or an alkyl-substituted aromatic radical. Suitable organometalloid radicals include mono-, di- and trisubstituted organometalloid radicals of Group IV-A elements wherein each of the hydrocarbyl groups contain from 1 to 20 carbon atoms. More particularly, suitable organometalloid radicals include trimethylsilyl, triethylsilyl, ethyldimethylsilyl, methyldiethylsilyl, triphenylgermyl, trimethylgermyl.

A similar list of illustrative bis(cyclopentadienyl)hafnium and bis(cyclopentadienyl)titanium compounds could be made, but since the lists would be nearly identical to that already presented with respect to bis(cyclopentadienyl) zirconium compounds, such lists are not deemed essential to a complete disclosure. Those skilled in the art, however, are aware that bis(cyclopentadienyl)hafnium compounds and bis(cyclopentadienyl)titanium compounds corresponding to certain of the bis(cyclopentadienyl)zirconium compounds listed supra are not known. The lists would, therefore, be reduced by these compounds. Other bis(cyclopentadienyl)hafnium compounds and other bis(cyclopentadienyl)titanium compounds as well as other bis(cyclopentadienyl)zirconium compounds which are useful for the catalyst to be prepared will, of course, be apparent to those skilled in the art.

Compounds useful as a second component in the preparation according to this invention will comprise a cation which is a Bronsted acid capable of donating a proton, and the compatible noncoordinating anion. Suitable metals for the anion then include, but are not limited to, aluminum, gold, platinum. Suitable metalloids include, but are not limited to, boron, phosphorus or silicon. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

In general, the second compounds useful in the preparation according this invention may be represented by the following general formula:

$$[(L'-H)^+]_d[(M')^{m+}Q_1Q_2 \cdots Q_n]^{d-}$$

Wherein:

L' is a neutral Lewis base;

H is a hydrogen atom;

[L'-H] is a Bronsted acid;

M' is a metal or metalloid selected from the Groups subtended by Groups V-B to V-A of the Periodic Table of the Elements; ie., Groups V-B, VI-B, VII-B, VIII, I-B, II-B, III-A, IV-A, and V-A;

$Q_1$ to $Q_n$ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of $Q_1$ to $Q_n$ may be a halide radical - the remaining $Q_1$ to $Q_n$ being, independently, selected from the foregoing radicals;

m is an integer from 1 to 7;

n is an integer from 2 to 8; and

n - m = d.

Second compounds comprising a boron containing anion which are particularly useful in the preparation of catalysts may be represented by the following general formula:

$$[L'-H]^+[BAr_1Ar_2X_3X_4]^-$$

Wherein:

L' is a neutral Lewis base;

H is a hydrogen atom;

$[L'-H]^+$ is a bronsted acid;

B is boron in a valence state of 3;

$Ar_1$ and $Ar_2$ are the same or different aromatic or substituted-aromatic hydrocarbon radicals preferably containing from 6 to 20 carbon atoms and may be linked to each other through a stable bridging group; and

$X_3$ and $X_4$ are radicals selected, independently, from the group consisting of hydride radicals, halide radicals, with the proviso that only $X_3$ or $X_4$ will be halide at the same time, hydrocarbyl radicals preferably containing from 12 to 20 carbon atoms, substituted-hydrocarbyl radicals, wherein one or more of the hydrogen atoms is replaced by a halogen atom, containing from 1 to 20 carbon atoms, hydrocarbyl-substituted metal (organometalloid) radicals wherein each hydrocarbyl substitution contains from 1 to 20 carbon atoms and said metal is selected from Group IV-A of the Periodic Table of the Elements.

In general, $AR_1$ and $AR_2$ may, independently, be any aromatic or substituted-aromatic hydrocarbon radical containing from 6 to 20 carbon atoms. Suitable aromatic radicals include, but are not limited to, phenyl, naphthyl and anthracenyl radicals. Suitable substituents on useful substituted-aromatic hydrocarbon radicals, include, but are not necessarily limited to, hydrocarbyl radicals, organometalloid radicals, alkoxy radicals, alkylamido radicals, fluoro and fluorohydrocarbyl radicals and the like such as those useful as $X_3$ or $X_4$. The substituent may be ortho, meta or para, relative to the carbon atom bonded to the boron atom. When either or both $X_3$ and $X_4$ are a hydrocarbyl radical, each may be the same or a different aromatic or substituted-aromatic radical as are $Ar_1$ and $Ar_2$, or the same may be a straight or branched alkyl, alkenyl or alkynyl radical having from 1 to 20 carbon atoms, a cyclic hydrocarbon radical having from 5 to 8 carbon atoms or an alkyl-substituted cyclic hydrocarbon radical having from 6 to 20 carbon atoms. $X_3$ and $X_4$ may also, independently, be alkoxy or dialkylamido radicals wherein the alkyl portion of said alkoxy and dialkylamido radicals contains from 1 to 20 carbon atoms, hydrocarbyl radicals and organometalloid radicals having from 1 to 20 carbon atoms. As indicated supra, $Ar_1$ and $Ar_2$ may be linked to each other. Similarly, either or both of $Ar_1$ and $Ar_2$ could be linked to either $X_3$ or $X_4$. Finally, $X_3$ and $X_4$ may also be linked to each other through a suitable bridging group.

Illustrative, but not limiting, examples of boron compounds which may be used as a second component in the preparation of the improved catalysts of this invention are trialkyl-substituted ammonium salts such as trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron, tri(n-butyl)ammonium tetra(o-tolyl)boron and the like; N,N-dialkyl anilinium salts and dialkyl ammonium salts such as di-(i-propyl)ammonium tetra(pentafluorophenyl)boron, and triaryl phosphonium salts.

Similar lists of suitable compounds containing other metals and metalloids which are useful as second components could be made, but such lists are not deemed necessary to a complete disclosure. In this regard, it should be noted that the foregoing list is not intended to be exhaustive and other boron compounds that would be useful as well as useful compounds containing other metals or metalloids would be readily apparent, from the foregoing general equations, to those skilled in the art.

In general, and while most first components identified above may be combined with most second components identified above to produce an active olefin polymerization catalyst, it is important to continued polymerization operations that either the metal cation initially formed from the first component or a decomposition product thereof be a relatively stable catalyst. It is also important that the anion of the second compound be stable to hydrolysis when an ammonium salt is used. Further, it is important that the acidity of the second component be sufficient, relative to the first, to facilitate the needed proton transfer. conversely, the basicity of the metal complex must also be sufficient to facilitate the needed proton transfer. Certain metallocene compounds - using bis(pentamethylcyclopentadienyl)hafnium dimethyl as an illustrative, but not limiting example - are resistant to reaction with all but the strongest Bronsted acids and thus are not suitable as first components to form the catalysts of this invention. In general, bis(cyclopentadienyl) metal compounds which can be hydrolyzed by aqueous solutions can be considered suitable as first components to form the catalysts described herein.

With respect to the combination of first (metal-containing) component to second component to form a catalyst of this invention, it should be noted that the two compounds combined for preparation of the active catalyst must be selected so as to avoid transfer of a fragment of the anion, particularly an aryl group, to the metal cation, thereby forming a catalytically inactive species. This could be done by steric hindrance, resulting from substitutions on the aromatic carbon atoms of the anion.

As the amount and size of the substitutions on the cyclopentadienyl radicals are reduced, however, more effective catalysts are obtained with second compounds containing anions which are more resistant to degradation, such as those with substituents on the ortho positions of the phenyl rings. Another means of rendering the anion more resistant to degradation is afforded by fluorine substitution, especially perfluoro-substitution, in the anion. Fluoro-substituted stabilizing anions may, then, be used with a broader range of metal compounds (first components).

In general, the catalyst can be prepared by combining the two components in a suitable solvent at a temperature within the range from -100°C to 300°C. The catalyst may be used to polymerize $\alpha$-olefins and/or acetylenically unsaturated monomers having from 2 to 18 carbon atoms and/or diolefins having from 4 to 18 carbon atoms either alone or in combination. The catalyst may also be used to polymerize $\alpha$-olefins, diolefins and/or acetylenically unsaturated monomers in combination with other unsaturated monomers. In general, the polymerization may be accomplished at conditions well known in the prior art. It will, of course, be appreciated that the catalyst system will form in situ if the components thereof are added directly to the polymerization process and a suitable solvent or diluent, including condensed monomer, is used in said polymerization process. It is, however, preferred to form the catalyst in a separate step in a suitable solvent prior to adding the same to the polymerization step. While the catalysts do not contain pyrophoric species, the catalysts' components are sensitive to both moisture and oxygen and should be handled and transferred in an inert atmosphere such as nitrogen, argon or helium.

As indicated supra, the improved catalyst of the present invention will, preferably, be prepared in a suitable solvent or diluent. Suitable solvents or diluents include any of the solvents known in the prior art to be useful as solvents in the polymerization of olefins, diolefins and acetylenically unsaturated monomers. Suitable solvents, then, include, but are not necessarily limited to, straight and branched-chain hydrocarbons such as isobutane, butane, pentane, hexane, heptane and octane; cyclic and alicyclic hydrocarbons such as cyclohexane, cycloheptane, methylcyclohexane and methylcycloheptane and aromatic and alkyl-substituted aromatic compounds such as benzene, toluene and xylene. Suitable solvents also include liquid olefins which may act as monomers or comonomers including ethylene, propylene, butadiene, cyclopentene, 1-hexene, 3-methyl-1-pentene, 4-methyl-1-pentene, 1,4-hexadiene, 1-octene and 1-decene. Suitable solvents further include basic solvents not generally useful as polymerization solvents when conventional Ziegler-Natta type polymerization catalysts are used such as chlorobenzene.

While the inventors do not wish to be bound by any particular theory, it is believed that when the two compounds used to prepare the catalysts are combined in a suitable solvent or diluent, all or a part of the cation of the second compound (the acidic proton) combines with one of the substituents on the metal containing (first component). In the case where the first component has a formula corresponding to that of general formula 1 supra, a neutral compound is liberated, which neutral compound either remains in solution or is liberated as a gas. In this regard, it should be noted that if either $X_1$ or $X_2$ in the metal containing (first component) is a hydride, hydrogen gas may be liberated. Similarly, if either $X_1$ or $X_2$ is a methyl radical, methane may be liberated as a gas. In the cases where the first component has a formula corresponding to those of general formulae 2, 3 or 4, one of the substituents on the metal-containing (first) component is protonated but, in general, no substituent is liberated from the metal. It is preferred that the molar ratio of first component to second component be 1:1 or greater. The conjugate base of the cation of the second compound, if one remains, will be a neutral compound which will remain in solution or complex with the metal cation formed, though, in general, a second compound is chosen such that any binding of the neutral conjugate base to the metal cation will be weak or non-existant. Thus, as the steric bulk of this conjugate base increases, it will, simply, remain in solution without interfering with the active catalyst. Similarly, if the cation of the second compound is a trialkyl ammonium ion, this ion will liberate a hydrogen atom to form gaseous hydrogen or methane and the conjugate base of the cation will be a tertiary amine. In like fashion, if the cation were a hydrocarbyl- substituted phosphonium ion containing at least one reactive proton, as is essential to the present invention, the conjugate base of the cation would be a phosphine.

While still not wishing to be bound by any particular theory, it is also believed that as one of the metal containing (first component) substituents (a ligand) is liberated, the compatible noncoordinating anion originally contained in the second compound used in the catalyst preparation combines with and stabilizes either the metal cation formed from the first component, formally having a coordination number of 3 and a +4 valences. The metal cation and noncoordinating anion will remain so combined until the catalyst is contacted with one or more olefins, diolefins and/or acetylenically unsaturated monomers either alone or in combination with one or more other monomers or another neutral Lewis base. As indicated supra, the anion contained in the second compound must be sufficiently labile to permit rapid displacement by an olefin, diolefin or an acetylenically unsaturated monomer to facilitate polymerization.

The chemical reactions which occur in forming the catalysts of this invention may, when a preferred, boron containing compound is used as the second component, be represented by reference to the general formulae set forth herein as follows:

$$1. \quad (\text{A-Cp})MX_1X_2 + [L'\text{-H}]^+[BAr_1Ar_2X_3X_4]^- \rightarrow$$

$$[(\text{A-Cp})MX_1]^+[BAr_1Ar_2X_3X_4]^- + HX_2 + L' \text{ or}$$

$$[(\text{A-Cp})MX_2]^+[BAr_1Ar_2X_3X_4]^- + HX_1 + L'$$

$$2. \quad (\text{A-Cp})M\overline{X'_1X'}_2 + [L'\text{-H}]^+[BAr_1Ar_2X_3X_4]^- \dashrightarrow$$

$$[(\text{A-Cp})M(\overline{X'_1X'}_2H)]^+[BAr_1Ar_2X_3X_4]^- + L' \text{ or}$$

$$[(\text{A-Cp})M(\overline{X'_2X'}_1H)]^+[BAr_1Ar_2X_3X_4]^- + L'$$

$$3. \quad (\text{A-Cp})ML + [L'\text{-H}]^+[BAr_1Ar_2X_3X_4]^- \rightarrow$$

$$[(\text{A-Cp})M(LH)]^+[BAr_1Ar_2X_3X_4]^- + L'$$

$$4. \quad (\text{Cp})(\overline{\text{R-Cp}^*})MX_1 + [L'\text{-H}]^+[BAr_1Ar_2X_3X_4]^- \dashrightarrow$$

$$[\text{Cp}(H\text{R-Cp}^*)MX_1]^+[BAr_1Ar_2X_3X_4]^- + L' \text{ or}$$

$$[\text{Cp}(\overline{\text{R-Cp}^*})M]^+[BAr_1Ar_2X_3X_4]^- + HX_1 + L'$$

In the foregoing reaction equations, the numbers correspond to the numbers set forth in combination with the general equations for useful metallocene compounds of Group IV-B metals (first components). In general the stability and rate of formation of the products in the foregoing reaction equations, particularly the metal cation, will vary depending upon the choice of the solvent, the acidity of the $[L'\text{-H}]^+$ selected, the particular L', the anion, the temperature at which the reaction is completed and the particular dicyclopentadienyl derivative of the metal selected. Generally, the initially formed ion-pair will be an active polymerization catalyst.

Active catalyst species which have not been characterized, including active decomposition products, are of the same type as those which have been isolated and fully characterized or at least retain the essential ion pair structure required for functioning as a catalyst. More particularly, it is believed that the active catalyst species which have not been isolated, including active decomposition products, are the same type as the isolated and characterized active catalyst species in that the these species contain a bis(cyclopentadienyl)metal center which center remains cationic, unsaturated and has a metal-carbon bond which is reactive with olefins, diolefins and acetylenically unsaturated compounds.

In general, the stable catalyst formed by the method of this invention may be separated from the solvent and stored for subsequent use. The less stable catalyst, however, will, generally, be retained in solution until ultimately used in the polymerization of olefins, diolefins and/or acetylenically unsaturated monomers. Alternatively, any of the catalysts prepared by the method of this invention may be retained in solution for subsequent use or used directly after preparation as a polymerization catalyst. Moreover, and as indicated supra, the catalyst may be prepared in situ during a polymerization reaction by passing the separate components into the polymerization vessel where the components will contact and react to produce the improved catalyst of this invention.

When the ratio of first compound to second compound is 1:1, at concentrations below $10^{-5}$M, the catalyst is often not active for olefin polymerization. While the inventors do not wish to be bound by any particular theory, it is believed that adventitious oxygen or moisture in the diluent or monomers may deactivate the catalyst. When the ratio of the first compound to the second compound is 2:1 to 10:1 or more, however, concentrations of the second component can be as low as about $10^{-6}$M.

When first compounds containing hafnium are reacted with second compounds containing a metal or a metalloid such as boron and a less acidic ammonium cations - using tri-(n-butyl)ammonium tetrakis(pentafluorophenyl)boron as an example - and the catalyst therefrom is used in the polymerization process of this invention, induction periods of 1 to 15 minutes or more can be observed before the uptake of monomer begins. This phenomenon is most pronounced when the concentration of the hafnium compound is below $10^{-4}$M and that of the second component is below $10^{-5}$M; higher concentrations of catalyst solution often show no induction period. It can also be observed when first compounds containing zirconium are used when the concentration of the second component is $10^{-6}$ M or less. While the inventors do not wish to be bound by any particular theory, it is believed that the catalyst species formed decomposes in the polymerization process to form a catalytically inactive metal-containing compound and regenerating either the same or a different second component. This new second component activates any excess first component present to regenerate the active catalyst species of the present invention. While still not wishing to be bound by any particular theory, it is believed that increasing the concentration of the catalyst or using second components containing more acidic ammonium cations will either diminish the length of this induction period or eliminate it completely.

In the polymerization process, the molecular weight appears to be a function of both catalyst concentration and polymerization temperature and polymerization pressure. The polymers produced with the catalyst, when prepared in the absence of significant mass transport effects, will, generally, have relatively narrow molecular weight distributions.

Certain of the catalysts, particularly those based on hafnocenes - using the catalyst produced from the reaction of bis(cyclopentadienyl)hafnium dimethyl and the trisubstituted ammonium salt of tetra(pentafluorophenyl)boron as an example - when used as described herein for the polymerization and copolymerization of $\alpha$-olefins, diolefins, and/or acetylenically unsaturated monomers, in the absence of a chain transfer agent, can lead to the production of extremely high molecular weight polymers and copolymers having relatively narrow molecular weight distributions. In this regard, it should be noted that homopolymers and copolymers having molecular weights up to $2 \times 10^6$ and molecular weight distributions within the range of 1.5 to 15 can be produced with the catalysts of this invention. The substituents on the cyclopentadienyl radicals, however, can exert a profound influence on polymer molecular weights.

Catalysts containing a first component which is either a pure enantiomer or the racemic mixture of two enantiomers of a rigid, chiral metallocene can polymerize prochiral olefins (propylene and higher $\alpha$-olefins) to isotactic polymers. Bis(cyclopentadienyl)metal compounds in which each of the cyclopentadienyl radicals is substituted and containing a covalent bridging group between the two cyclopentadienyl radicals are particularly useful for isotactic polymerizations of this type.

A particularly surprising feature of some of the catalysts, particularly those based on hafnocenes in combination with a second component comprising boron, is that when the catalysts of this invention are used to copolymerize $\alpha$-olefins, either alone or in combination with diolefins, the amount of higher molecular weight olefin or diolefin incorporated into the copolymer is significantly increased when compared to copolymers prepared with the more conventional Ziegler-Natta type catalysts and bis-(cyclopentadienyl)zirconium catalysts. The relative rates of reaction of ethylene and higher $\alpha$-olefins with the aforementioned hafnium-based catalysts of this invention are much closer than with conventional Ziegler-Natta catalysts of the Group IV-B metals. The monomer distribution in copolymers prepared with the catalysts of this invention, particularly with the lower $\alpha$-olefins and lower diolefins, will range from near perfectly alternating to statistically random.

In general, catalysts can be selected so as to produce the polymer products which will be free of certain trace metals generally found in polymers produced with Ziegler-Natta type catalysts such as aluminum, magnesium, chloride. The polymer products produced with the catalysts of this invention should, then, have a broader range of applications than polymers produced with more conventional Ziegler-Natta type catalysts comprising a metal alkyl, such as an aluminum alkyl.

In a preferred embodiment of a use according to the invention a bis(cyclopentadienyl)metal compounds (said metal being selected from the Group consisting of titanium, zirconium and hafnium, said compound containing two, independently, substituted or unsubstituted cyclopentadienyl radicals and one or two lower alkyl substituents and/or one or two hydride substituemts) will be combined with a trisubstituted ammonium salt of a substituted tetra(aromatic)boron. Each of the trisubstitutions in the ammonium cation will be the same or a different lower alkyl or aryl radical. By lower alkyl is meant an alkyl radical containing from one to four carbon atoms. When the bis(cyclopentadienyl)metal compound used is a bis(perhydrocarbyl-substituted cyclopentadienyl)metal compound, a partially substituted tetra(aromatic)boron salt may be used.

As the number of hydrocarbyl-substitutions on the cyclopentadienyl radicals is reduced, however, substituted anions will be used in the trisubstituted ammonium salts, particularly, pentafluoro-substituted anions. Tri(n-butyl)ammonium tetra(fluorophenyl)boron is particularly preferred.

In a most preferred embodiment of the present invention, bis(cyclopentadienyl)zirconium dimethyl or bis(cyclopentadienyl)hafnium dimethyl will be reacted with N,N-dimethylanilinium tetra(pentafluorophenyl)boron to produce the most preferred catalyst of the present invention. The two components will be combined at a temperature within the range from 0°C to 100°C. The components will be combined, preferably, in an aromatic hydrocarbon solvent. most preferably toluene. Nominal holding times within the range from 10 seconds to 60 minutes will be sufficient to produce both the preferred and most preferred catalyst of this invention.

In a preferred embodiment, the catalyst, immediately after formation, will then be used to polymerize a lower $\alpha$-olefin particularly ethylene or propylene, most preferably ethylene, at a temperature within the range from 0°C to 100°C and at a pressure within the range from 1.03 to 34.45 bar (15 to 500 psig). In a most preferred embodiment, the catalyst will be used either to homopolymerize ethylene or to copolymerize ethylene with a lower $\alpha$-olefin having from 3 to 6 carbon atoms, thereby yielding a plastic or an elastomeric copolymer. In the preferred embodiments, the monomers will be maintained at polymerization conditions for a nominal holding time within the range from 1 to 60 minutes and the catalyst will be used at a concentration within the range from $10^{-5}$ to $10^{-1}$ moles per liter of solvent.

Having thus broadly described the present invention and a preferred and most preferred embodiment thereof, it is believed that the same will become even more apparent by reference to the following examples. It will be appreciated, however, that the examples are presented solely for purposes of illustration and should not be construed as limiting the invention. All of the examples were completed either under an argon blanket by standard Schlenk techniques or under a helium blanket in a Vacuum Atmospheres HE43-2 drybox. The solvents used in the experiments were rigorously dried under nitrogen by standard techniques. The boron and metallocene reagents used in the examples were either purchased or prepared following published techniques.

### EXAMPLE 1

In this example, an active isolable olefin polymerization catalyst was produced by first suspending 0.56 g of tri(n-butyl)ammonium tetra(o-tolyl)boron in 50 ml of toluene and then adding 0.25 g of bis(cyclopentadienyl)zirconium dimethyl. The mixture was stirred at room temperature for 1 hour. After 1 hour an insoluble yellow precipitate separated from an orange solution. The yellow precipitate was isolated by filtration, washed three times with 20 ml of pentane and dried in-vacuo. 0.26 g of the yellow precipitate were recovered.

### EXAMPLE 2

In this example, excess ethylene was added at atmospheric pressure to a portion of the orange mother liquor from Example 1 in a 100 ml side armed flask and polyethylene formed. Ethylene was also contacted with a portion of the yellow precipitate, which precipitate was suspended in toluene in a 50 ml side armed flask and again polyethylene was formed.

### EXAMPLE 3

In this example, an active, isolable olefin polymerization catalyst was prepared by first suspending 0.78 g of tri(n-butyl)ammonium tetra(m,m-dimethylphenyl)boron in 50 ml of toluene and then adding 0.50 g of bis(pentamethylcyclopentadienyl)zirconium dimethyl. The mixture was stirred at room temperature for 1 hour. After 1 hour, the reaction mixture was evaporated to dryness. The resulting crude red-brown solid was washed with 30 ml of pentane and dried in-vacuo to yield 0.56 g of a toluene soluble brown solid. Both the brown solid and the crude reaction mixture were dissolved in 40 ml of toluene in a 100 ml side armed flask and were observed to polymerize ethylene at atmospheric pressure.

### EXAMPLE 4

In this example, two active, isolable olefin polymerization catalysts were prepared by first dissolving 0.78 g of tri (n-butyl)ammonium tetra(o,p-dimethylphenyl)boron in 30 ml of toluene and 15 ml of pentane. The solution was then cooled to -30°C and 0.50 g of bis(pentamethylcyclopentadienyl)zirconium dimethyl were added. The mixture was warmed to room temperature with agitation and held for 4 hours. A yellow precipitate was separated from a purple reaction mixture by filtration. The yellow precipitate was dried in-vacuo to give 0.62 g of product. After separation of the yellow precipitate, the purple mother liquor was evaporated to dryness to give 0.32 g of a purple glassy solid. The yellow and purple products polymerized ethylene in deuterotoluene in NMR tubes.

EXAMPLE 5

In this example, an active olefin polymerization catalyst was prepared by first suspending 0.87 g of tri(n-butyl) ammonium tetra(p-tolyl)boron in 50 ml of toluene and then adding 0.50 g of (pentamethylcyclopentadienyl)(cyclopentadienyl)zirconium dimethyl. The reaction was stirred at room temperature for 18 hours to give a blue-green homogenous solution. The reaction mixture was dried <u>in-vacuo</u>, washed with 30 ml of pentane, and then redissolved in 100 ml of toluene. The resulting blue-green solution was filtered into a glass pressure vessel and stirred under 1.5 atmospheres of ethylene. An immediate exotherm and polymer formation was observed upon exposure of ethylene. The yield of polyethylene was 4.5 g after 15 minutes.

EXAMPLE 6

In this example, an olefin polymerization catalyst was prepared by first suspending 0.1 g of tri(n-butyl)ammonium tetra(p-ethylphenyl)boron in 5 ml of $d_6$-benzene and then adding 0.05 g of (pentamethylcyclopentadienyl)(cyclopentadienyl)zirconium dimethyl. The reaction was complete after 30 minutes. The green solution was then dried <u>in-vacuo</u> to give a green glassy solid. The crude green product was extracted with 20 ml of toluene. In separate experiments, the toluene extract was exposed to ethylene, to propylene and to a mixture of ethylene and propylene. In each case significant polymerization activity was observed.

EXAMPLE 7

In this example, an active olefin polymerization catalyst was prepared by first suspending 0.22 g of tri(n-butyl) ammonium tetra(pentafluorophenyl)boron in 50 ml of toluene and then adding 0.10 g of bis(pentamethylcyclopentadienyl)zirconium dimethyl. The reaction vessel was capped with a rubber septum and stirred at room temperature. After 10 minutes the reaction mixture (now yellow and homogeneous) was pressurized with 1.5 atmospheres of ethylene and stirred vigorously. Rapid polymerization of ethylene was observed causing a significant increase in the reaction temperature (from room temperature to at least 80°C) during the first 5 minutes of polymerization. After 15 minutes, the reaction vessel was vented and methanol was added to kill the still active catalyst. The yield of linear polyethylene was 3.7 g.

EXAMPLE 8

In this example, an active olefin polymerization catalyst was prepared by suspending 0.34 g of tri(n-butyl)ammonium tetra(pentafluorophenyl)boron in 50 ml of toluene and then adding 0.13 g of (pentamethylcyclopentadienyl) (cyclopentadienyl)zirconium dimethyl. The reaction vessel was capped with a rubber septum and stirred at room temperature. After 10 minutes the reaction mixture (a yellow solution above an insoluble orange oil) was pressurized with 1.5 atmospheres of ethylene and stirred vigorously. Rapid polymerization of ethylene was observed causing a significant increase in the reaction temperature (from room temperature to at least 80°C) during the first minutes of polymerization. After 10 minutes, the reaction vessel was vented and methanol was added to kill the still active catalyst. The yield of linear polyethylene was 3.7 g.

EXAMPLE 9

In this example, an active olefin polymerization catalyst was prepared by combining 0.18 g of tri(n-butyl)ammonium tetra(pentafluorophenyl)boron in 50 ml of toluene and then adding 0.12 g of bis[1,3-bis(trimethylsilyl)cyclopentadienyl] zirconium dimethyl. The reaction vessel was capped with a rubber septum and stirred at room temperature. After 10 minutes the reaction mixture (a yellow solution above an insoluble yellow oil) was pressurized with 1.52 bar (1.5 atmospheres) of ethylene and stirred vigorously. Rapid polymerization of ethylene was observed causing a significant increase in the reaction temperature (from room temperature to at least 80°C) during the first minutes of polymerization. After 10 minutes the reaction vessel was vented and methanol was added to kill the still active catalyst. The yield of linear polyethylene was 2.1 g.

EXAMPLE 10

In this example, an active olefin polymerization catalyst was prepared by suspending 0.34 g of tri(n-butyl)ammonium tetra(pentafluorophenyl)boron in 50 ml of toluene and then adding 0.10 g of bis(cyclopentadienyl)zirconium dimethyl. The reaction vessel was capped with a rubber septum and stirred at room temperature. After 10 minutes the reaction mixture (a yellow solution above an insoluble orange oil) was pressurized with 1.52 bar (1.5 atmospheres) of ethylene and stirred vigorously. Rapid polymerization of ethylene was observed causing a significant increase in the reaction temperature (from room temperature to at least 80°C) during the first minutes of polymerization. After 10 minutes the reaction vessel was vented and methanol was added to deactivate the still active catalyst. The yield of linear polyethylene was 3.7 g.

EXAMPLE 11

In this example, an active olefin polymerization catalyst was prepared by combining 0.12 g of tri(n-butyl)ammonion tetra(pentafluorophenyl)boron and 0.04 g of bis(cyclopentadienyl)zirconium dimethyl in 100 ml of toluene in a 250 ml flask. The flask was capped with a rubber septum and stirred at 60°C for 3 minutes. Ethylene at 1.5 atmospheres and 3 ml of 1-hexene were then added to the flask. After 20 minutes, the flask was vented and methanol was added to deactivate the still active catalyst. The white polymeric product was collected by filteration and dried in-vacuo to yield 8.0 g of a hexene-ethylene copolymer. The melting point of the copolymer was 125°C.

EXAMPLE 12

In this example, ethylene and 1-butene were copolymerized in a hexane diluent by adding under a nitrogen atmosphere to a 1 L stainless-steel autoclave, previously flushed with nitrogen and containing 400 ml of dry oxygen-free hexane, 40 ml of a toluene solution containing 4 mg of bis(cyclopentadienyl)zirconium dimethyl and 12 mg of tri(n-butyl)ammonium tetrakis(pentafluorophenyl)boron. 1-butene (200 ml) was added to the autoclave, which was further pressurized with 4.46 bar (65 psig) of ethylene. The autoclave was stirred and heated for 7 minutes at 60°. The reactor was vented and cooled and the contents dried. The yield of copolymer isolated was 9.2 g. The weight-average molecular weight of the polymer was 108,000 and the molecular weight distribution was 1.97. A compositional distribution analysis indicated a breadth index of 88%.

EXAMPLE 13

In this example, ethylene and 1-butene were copolymerized in a hexane diluent by adding under a nitrogen atmosphere to a 1 L stainless-steel autoclave, previously flushed with nitrogen and containing 400 ml of dry, oxygen-free hexane, 40 ml of a toluene solution containing 4 mg of bis(cyclopentadienyl)zirconium dimethyl and 12 mg of tri (n-butyl)ammonium tetrakis(pentafluorophenyl)boron. 1-butene (200 ml) was added to the autoclave, which was further pressurized with 4.46 bar (65 psig) of ethylene. The autoclave was stirred and heated at 50° for 10 minutes. The autoclave was vented and cooled and the contents dried. The yield of copolymer isolated was 7.1 g. The weight-average molecular weight of the polymer was 92,000 with a molecular weight distribution of 1.88. Analysis by $^{13}$C NMR spectroscopy indicated a reactivity ratio ($r_1 r_2$) of 0.145.

EXAMPLE 14

In this example, ethylene and 1-butene were copolymerized in a hexane diluent by adding under a nitrogen atmosphere to a 1 L stainless-steel autoclave, previously flushed with nitrogen and containing 400 ml of dry, oxygen-free hexane, 25 ml of a toluene solution containing 9 mg of bis[(t-butyl)cyclopentadienyl]zirconium dimethyl and 2.9 mg of N,N-dimethylanilinium tetrakis(pentafluorophenyl)boron. 1-butene (100 ml) was added to the autoclave, which was further pressurized with 4.46 bar (65 psig) of ethylene. The autoclave was stirred and heated at 50° for 1 hour. The autoclave was vented and cooled and the contents dried. The yield of copolymer isolated was 27.2 g. The weight-average molecular weight of the polymer was 23,000 with a molecular weight distribution of 1.8. Analysis of the composition distribution indicated a median comonomer content of 6.3 mole% and a breadth index of 81%.

EXAMPLE 15

In this example, ethylene was polymerized by adding under a nitrogen atmosphere to a 1 L stainless-steel autoclave, previously purged with nitrogen and containing 400 ml of dry, oxygen-free hexane, first a solution of 15 mg of bis(cyclopentadienyl)hafnium dimethyl in 30 ml of toluene, then, after 5 minutes, a toluene solution (50 ml) containing 12 mg of bis(cyclopentadienyl)hafnium dimethyl and 30 mg of tri(n-butyl)ammonium tetrakis(perfluorophenyl)boron. The autoclave was pressured with 6.2 bar (90 psig) of ethylene and stirred at 60°. After 1 hour, the autoclave was vented and opened. The yield of linear polyethylene isolated was 73.8 g. This material had a weight-average molecular weight of 1,100,000 and a molecular weight distribution of 1.78.

EXAMPLE 16

In this example, ethylene and propylene were copolymerized in a hexane diluent by adding under a nitrogen atmosphere to a 1 L stainleess-steel autoclave previously flushed with nitrogen and containing 400 ml of dry, oxygen-free hexane, first a solution of 15 mg bis(cyclopentadienyl)hafnium dimethyl in 25 ml of toluene, stirring for 5 minutes,. then 50 ml of a toluene solution containing 17 mg bis(cyclopentadienyl)hafnium dimethyl and 42 mg of tri(n-butyl) ammonium tetrakis(pentafluorophenyl)boron. Propylene (200 ml) was added to the autoclave, which was further pressured with an additional 3.45 bar (50 psig) of ethylene. The autoclave was stirred at 60° for 15 minutes. The reactor was vented and opened and the residual hexane in the contents evaporated under a stream of air. The yield of copolymer isolated was 61.0 g. This copolymer, which was 35.1 wt% ethylene, had a weight-average molecular weight of 103,000 and a molecular weight distribution of 2.3. Analysis by $^{13}$C NMR spectroscopy indicated a statistically random copolymer.

EXAMPLE 17

In this example, ethylene and propylene were copolymerized in bulk propylene by adding under a nitrogen atmosphere to a 1 L stainless-steel autoclave preeviously flushed with nitrogen 50 ml of a toluene solution containing 36 mg of bis(cyclopentadienyl)hafnium dimethyl and 11 mg of N,N-dimethylanilinium tetrakis(pentafluorophenyl)boron. Propylene (400 ml) was added to the autoclave, which was further pressurized with 8.3 bar (120 psig) of ethylene. After stirring for 15 minutes at 50°, the reactor was vented and opened and the contents dried under a stream of air. The yield of copolymer isolated was 52.6 g. The copolymer, which was 38.1 wt% ethylene, had a weight-average molecular weight of 603,000 and a molecular weight distribution of 1.93.

EXAMPLE 18

In this example, ethylene and 1-butene were copolymerized in a hexane diluent by adding under a nitrogen atmosphere to a 1 L stainless-steel autoclave, previously flushed with nitrogen and containing 400 ml of dry, oxygen-free hexane, first a 30 ml of a toluene solution containing 15 mg of bis(cyclopentadienyl hafnium dimethyl, then after stirring for 5 minutes, 30 ml of a toluene solution containing 12 mg of bis(cyclopentadienyl)hafnium dimethyl and 30 mg of tri(n-butyl)ammonium tetrakis(pentafluorophenyl)boron. 1-butene (50 ml) was added to the autoclave, which was further pressurized with 4.48 bar (65 psig) of ethylene. The autoclave was stirred and heated to 50° for 1 hour. The reactor was vented and opened and the contents dried in a vacuum oven. The yield of copolymer isolated was 78.7 g. This copolymer, which was 62.6 wt% ethylene, had a weight-average molecular weight of 105,000 and a molecular weight distribution of 4.94. Analysis by $^{13}$C NMR spectroscopy indicated a reactivity ratio ($r_1 r_2$) of 0.153.

EXAMPLE 19

In this example, ethylene, propylene, and 1-butene were copolymerized in a hexane diluent by adding under a nitrogen atmosphere to a 1 L stainless-steel reactor, previously flushed with nitrogen and containing 400 ml of dry, oxygen-free hexane, 50 ml of a toluene solution containing 19 mg of bis(cyclopentadienyl)hafnium)hafnium dimethyl and 15 mg of tri(n-butyl)ammonium tetrakis(pentafluorophenyl)boron. 1-butene (50 ml) and propylene (25 ml) were added to the autoclave, which was further pressurized with 4.13 bar (60 psig) of ethylene. The autoclave was stirred at 50° for 45 minutes, then cooled and vented. The contents were dried under a stream of air. The yield of isolated terpolymer was 17.9 g. The weight-average molecular weight of the polymer was 188,000 and the molecular weight distribution was 1.89. Analysis by $^{13}$C NMR spectroscopy indicated that the polymer contained 62.9 mole% ethylene, 25.8 mole% propylene, and 11.3 mole% butene.

EXAMPLE 20

In this example, ethylene, propylene, and 1,4-hexadiene were copolymerized in a hexane diluent by adding under a nitrogen atmosphere to a 1 L stainless-steel autoclave, previously flushed with nitrogen and containing 400 ml of dry, oxygen-free hexane, first 100 ml of freshly-distilled 1,4-hexadiene, then 50 ml of a catalyst solution containing 72 mg of bis(cyclopentadienyl)hafnium dimethyl and 16 mg N,N-dimethylanilinium tetrakis(perfluorophenyl)boron. Propylene (50 ml) was added to the autoclave, which was further pressurized with 6.2 bar (90 psig) of ethylene. The autoclave was stirred at 50° for 10 minutes, then cooled and vented. The contents were dried under a stream of air. The yield of isolated terpolymer was 30.7 g. The weight-average molecular weight of the polymer was 191,000 and the molecular weight distribution was 1.61. Analysis by $^{13}$C NMR spectroscopy indicated that the polymer contained 70.5 mole% ethylene, 24.8 mole% propylene, and 4.7 mole% 1,4-hexadiene.

EXAMPLE 21

In this example, ethylene and 1-hexene were copolymerized in a hexane diluent by adding under a nitrogen atmosphere to a 1 L stainless-steel autoclave, previously flushed with nitrogen and containing 400 ml of dry, oxygen-free hexane, first 30 ml of toluene solution containing 15 mg of bis(cyclopentadienyl)hafnium dimethyl, then, after 5 minutes, 100 ml of alumina-filtered and degassed 1-hexene and then 50 ml of a toluene solution containing 12 mg of his(cyclopentadienyl)hafnium dimethyl and 30 mg of tri(n-butyl)ammonium tetrakis(pentafluorophenyl)boron. The autoclave was pressurized with 4.48 bar (65 psig) of ethylene, stirred and heated at 50° for 1 hour, then cooled and vented. The contents were dried in a vacuum oven. The yield of isolated copolymer was 54.7 g. The copolymer, which was 46 wt% ethylene, had a weight-average molecular weight of 138,000 and a molecular weight distribution of 3.08. Analysis by $^{13}$C NMR spectroscopy indicated a reactivity ratio ($r_1 r_2$) of 0.262.

EXAMPIE 22

In this example, propylene was polymerized in a hexane diluent by adding under a nitrogen atmosphere to a 1 L stainless-steel autoclave, previously flushed with nitrogen and containing 200 ml of dry, oxygen-free hexane, 50 ml of a toluene solution containing 72 mg of bis(cyclopentadienyl)hafnium dimethyl and 22 mg of N,N'-dimethylanilinium tetrakis(pentafluorophenyl)boron. Propylene (200 ml) was added and the autoclave was stirred at 40° for 65 minutes. The autoclave was cooled and vented and the contents dried in a vacuum oven. The yield of atactic polypropylene was 37.7 g. The weight-average molecular weight of this polymer was 92,000 and the molecular weight distribution was 1.54.

EXAMPLE 23

In this experiment, propylene was polymerized in bulk propylene by adding under a nitrogen atmosphere to a 1 L stainless-steel autoclave, previously flushed with nitrogen, 50 ml of a toluene solution containing 77 mg of bis(cyclopentadienyl)hafnium dimethyl and 22 mg of N,N-dimethylanilinium tetrakis(pentafluorophenyl)boron. Propylene (400 ml) was added and the autoclave stirred at 40° for 90 minutes. The autoclave was cooled and vented and the contents dried in a vacuum oven. The yield of atactic polypropylene isolated was 58.7 g. The weight-average molecular weight of this polymer was 191,000 and the molecular weight distribution was 1.60.

EXAMPLE 24

In this example, propylene was polymerized in bulk propylene by washing 72 mg of bis(cyclopentadienyl)hafnium dimethyl and 22 mg of N,N-dimethylanilinium tetrakis(pentafluorophenyl)boron into a 1 L stainless-steel autoclave, previously flushed with nitrogen, with 500 ml of propylene. The autoclave was stirred at 40° for 90 minutes and at 50° for another 30 minutes, then cooled and vented. 2.3 g of atactic polypropylene were isolated.

EXAMPLE 25

In this example, ethylene was polymerized by reacting 55 mg of bis(trimethylsilylcyclopentadienyl)hafnium dimethyl with 80 mg of N,N-dimethylanilinium tetrakis(pentafluorophenyl boron in 5 ml of toluene in a serum-capped vial. On passing ethylene through the solution for 15 seconds, polymer formed as the mixture grew hot. The vial was opened and the contents diluted with acetone, filtered, washed, and dried. The yield of polyethylene was 0.26 g.

EXAMPLE 26

In this example, propylene was polymerized in bulk propylene by adding under a nitrogen atmosphere to a 1 L stainless-steel autoclave, previously flushed with nitrogen, 25 ml of a toluene solution containing 10 mg of rac-dimethylsilyl bis(indenyl)hafnium dimethyl and 5 mg of N,N-dimethylanilinium tetrakis(pentafluorophenyl)boron. Propylene (500 ml) was added and the autoclave stirred at 40° for 4.5 hours. The autoclave was cooled and vented and the contents dried in a vacuum oven. The yield of isotactic polypropylene isolated was 78.5 g. The weight-average molecular weight of this polymer was 555,000 and the molecular weight distribution was 1.86. The polymer had a melting point of 139°C. Analysis by $^{13}$C NMR spectroscopy indicated that the polymer was about 95% isotactic.

EXAMPLE 27

In this example, an active ethylene polymerization catalyst was prepared by suspending 40 mg of N,N-dimethylanilinium tetrakis(pentafluorophenyl)boron and 17 mg of 1-bis(cyclopentadienyl)zircona-3-dimethylsilacyclobutane in 10 ml of toluene in a septum-capped round bottomed flask. Passage of ethylene through the solution for 30 seconds caused the solution to become hot as polymer precipitated. The flask was opened and the contents diluted with acetone. The polymer was filtered off, washed with acetone, and dried in vacuo. The yield of polymer isolated was 0.15 g.

EXAMPLE 28

In this example, an active ethylene polymerization catalyst was prepared by suspending 36 mg of 1-bis(cyclopentadienyl)titana-3-dimethylsilacyclobutane and 80 mg of N,N-dimethylanilinium tetrakis(pentafluorophenyl)boron in 20 ml of toluene in a serum-capped round-bottomed flask. The solution darkened when ethylene was passed through it. After 5 minutes, the flask was opened and the contents diluted with ethanol. The polymer was filtered off, washed with ethanol, and dried. The yield of polyethylene isolated was 0.51 g.

EXAMPLE 29

In this example, an active ethylene polymerization catalyst was prepared by suspending 29 mg of (pentamethyl cyclopentadienyl)(tetramethyl-eta$^1$-cyclopentadienyl)zirconium phenyl and 43 mg of tri(n-butyl)ammonium tetrakis (pentafluorophenyl)boron in 25 ml of toluene in a serum-capped round-bottomed flask. On passing ethylene through the solution, polymer formed almost instantly. After 5 minutes, the flask was opened and the contents diluted with ethanol. The polymer was filtered off, washed with acetone, and dried. The yield of polyethylene isolated was 0.49 g.

EXAMPLE 30

In this example, an active ethylene polymerization catalyst was prepared by suspending 34 mg of bis(cyclopentadienyl)zirconium(2,3-dimethyl-1,3-butadiene) and 85 mg of tri(n-butyl)ammonium tetrakis(pentafluorophenyl)boron in 50 ml of toluene in a serum-capped bottle. On introducing ethylene, the solution grew warm instantly as polymer precipitated. After 5 minutes the bottle was opened and the contents diluted with ethanol. The polymer formed was filtered off, washed with ethanol, and dried. The yield of polymer isolated was 1.06 g.

EXAMPLE 31

In this example, ethylene was polymerized by reacting 20 mg of 1-bis(cyclopentadienyl)hafna-3-dimethylsilacyclobutane and 39 mg of N,N-dimethylanilinium tetrakis(pentafluorophenyl)boron in 20 ml of toluene in a serum-capped round-bottomed flask. On passing ethylene through the solution, polymer precipitated as the solution grew warm. After 1 minute, the flask was opened and the contents diluted with ethanol. The polymer was filtered off, washed with ethanol, and dried. The yield of polyethylene isolated was 0.263 g.

EXAMPLE 32

In this example, ethylene was polymerized by reacting 21 mg of bis(cyclopentadienyl)hafnium(2,3-dimethyl-1,3-butadiene) and 41 mg of tri(n-butyl)ammonium tetrakis(pentafluorophenyl)boron in 50 ml of toluene in a serum-capped bottle. On passing ethylene through the solution, polymer precipitated within seconds. After 10 minutes, the bottle was opened and the contents diluted with ethanol. The solid polymer was filtered off, washed with acetone, and dried. The yield of polyethylene isolated was 0.93 g.

EXAMPLE 33

In this example, ethylene was polymerized by reacting 53 mg of (pentamethylcyclopentadienyl)(tetramethylcyclopentadienylmethylene)hafnium benzyl and 75 mg of N,N-dimethylanilinium tetrakis(pentafluorophenyl)boron in 50 ml of toluene in a serum-capped bottle. Ethylene was passed through the solution for 10 minutes. The bottle was opened and the contents diluted with ethanol. The polymer was filtered off, washed with acetone, and dried. The yield of polyethylene isolated was 0.65 g.

**Claims**

1. Use, in the preparation of a catalyst for polymerisation of olefins, diolefins and/or acetylenically unsaturated monomers, of an anion of the formula $[(M')^{m+}Q_1Q_2...Q_n]^{d-}$ wherein:

M' is a metal or metalloid of Group V-B to VI-A of the Periodic Table of Elements; i.e. Groups V-B; VI-B; VII-B; VIII; I-B; II-B; III-A; IV-A and V-A;

$Q_1$ to $Q_n$ are selected independently from the Group consisting of hydride radicals, dialkylamido radicals, alkoxide and aryloxide radicals; hydrocarbyl and substituted hydrocarbyl radicals and organometalloid radicals and any one, but not more than one of the $Q_1$ to $Q_n$ may be a halide radical - the remaining $Q_1$ to $Q_n$ being independently selected from the foregoing radicals;

m is an integer from 1 to 7; n is an integer from 2 to 8;

and n-m = d, the anion containing substituted aromatic carbons or being fluorine substituted so as to resist degradation.

2. Use according to claim 1 in which the anion is of the general formula $[BAr_1Ar_2X_3X_4]^-$ wherein:

B is boron in a valence state of 3;

$Ar_1$ and $Ar_2$ are the same or different aromatic or substituted aromatic hydrocarbon radicals containing from 6 to 20 carbon atoms, optionally linked to each other through a stable bridging group; and $X_3$ and $X_4$ are hydride or halide, with the proviso that only $X_3$ or $X_4$ will be halide at the same time, hydrocarbyl radicals containing from 1 to 20 carbon atoms, substituted hydrocarbyl radicals, wherein one or more of the hydrogen atoms is replaced by a halogen atom, containing from 1 to 20 carbon atoms, hydrocarbyl-substituted metal (organometalloid) radicals wherein each hydrocarbyl substitution contains from 1 to 20 carbon atoms and said metal is of Group IV-A of the Periodic Table of Elements.

3. Use, according to claim 1, in which the anion has in it perfluoro-substitution.

4. Use, according to claim 3, in which the anion is tetrakis(pentafluorophenyl)boron.


**Patentansprüche**

1. Verwendung eines Anions mit der Formel $[(M')^{m+}Q_1Q_2...Q_n]^{d-}$, in der

M' ein Metall oder Metalloid der Gruppe V-B bis VI-A des Periodensystems der Elemente ist, d. h. aus den Gruppen V-B, VI-B, VII-B, VIII, I-B, II-B, III-A, IV-A und V-A,

$Q_1$ bis $Q_n$ unabhängig ausgewählt sind aus der Gruppe bestehend aus Hydridresten, Dialkylamidoresten, Alkoxid- und Aryloxidresten, Kohlenwasserstoff- und substituierten Kohlenwasserstoffresten und Organometalloidresten, wobei ein beliebiger, aber nicht mehr als einer von $Q_1$ bis $Q_n$ ein Halogenidrest sein kann, und die verbleibenden $Q_1$ bis $Q_n$ unabhängig ausgewählt sind aus den vorhergehenden Resten,

m eine ganze Zahl von 1 bis 7 ist, n eine ganze Zahl von 2 bis 8 ist und n - m = d ist, wobei das Anion substituierte aromatische Kohlenstoffatome enthält oder fluorsubstituiert ist, um so dem Abbau zu widerstehen,

zur Herstellung eines Katalysators zur Polymerisation von Olefinen, Diolefinen und/oder acetylenisch ungesättigten Monomeren.

2. Verwendung nach Anspruch 1, bei der das Anion die allgemeine Formel $[BAr_1Ar_2X_3X_4]^-$ hat, wobei

B Bor in der Wertigkeitsstufe 3 ist,

$Ar_1$ und $Ar_2$ die gleichen oder unterschiedliche aromatische oder substituierte aromatische Kohlenwasserstoffreste sind, die 6 bis 20 Kohlenstoffatome enthalten und gegebenenfalls über eine stabile Brückengruppe miteinander verbunden sind, und $X_3$ und $X_4$ Hydrid oder Halogenid mit der Maßgabe, daß nur ein $X_3$ oder $X_4$ zur gleichen Zeit Halogenid ist, Kohlenwasserstoffreste mit 1 bis 20 Kohlenstoffatomen, substituierte Kohlenwasserstoffreste mit 1 bis 20 Kohlenstoffatomen, in denen ein oder mehrere der Wasserstoffatome durch ein Halogenatom ersetzt sind, kohlenwasserstoffsubstituierte Metallreste (Organometalloidreste), in denen jeder Kohlenwasserstoffsubstituent 1 bis 20 Kohlenstoffatome enthält und das Metall aus der Gruppe IV-A des Periodensystems der Elemente ist, sind.

3. Verwendung nach Anspruch 1, bei der das Anion Perfluorsubstitution enthält.

4. Verwendung nach Anspruch 3, bei der das Anion Tetrakis(pentafluorphenyl)bor ist.

**Revendications**

1. Utilisation, dans la préparation d'un catalyseur destiné à la polymérisation d'oléfines, de dioléfines et/ou de monomères à non-saturation acétylénique, d'un anion de formule $[(M')^{m+}Q_1Q_2...Q_n]^{d-}$ dans laquelle :

   M' est un métal ou un métalloïde des Groupes V-B à VI-A du Tableau Périodique des Eléments, c'est-à-dire des Groupes V-B ; VI-B ; VII-B ; VIII ; I-B ; II-B ; III-A ; IV-A et V-A ;
   $Q_1$ à $Q_n$ sont choisis, indépendamment, dans le groupe consistant en radicaux hydrure, radicaux dialkylamido, radicaux alkoxydes et radicaux aryloxydes ; des radicaux hydrocarbyle et hydrocarbyle substitués et des radicaux organométalloïdiques et l'un quelconque, mais pas plus d'un, de $Q_1$ à $Q_n$ peut être un radical halogénure - les radicaux $Q_1$ à $Q_n$ restants étant choisis, indépendamment, parmi les radicaux précédents ;
   m est un nombre entier de 1 à 7 ; n est un nombre entier de 2 à 8 ; et la différence n-m est égale à d, l'anion contenant des atomes aromatiques de carbone substitués ou étant substitué avec du fluor de manière à résister à la dégradation.

2. Utilisation suivant la revendication 1, dans laquelle l'anion répond à la formule générale $[BAr_1Ar_2X_3X_4]^-$ dans laquelle :

   B représente le bore au degré de valence 3 ;
   $Ar_1$ et $Ar_2$ sont des radicaux hydrocarbonés aromatiques ou aromatiques substitués identiques ou différents contenant 6 à 20 atomes de carbone, facultativement liés l'un à l'autre par un groupe stable de pontage ; et $X_3$ et $X_4$ représentent un radical hydrure ou halogénure, sous réserve qu'un seul à la fois des radicaux $X_3$ et $X_4$ représente un radical halogénure, des radicaux hydrocarbyle contenant 1 à 20 atomes de carbone, des radicaux hydrocarbyle substitués, dont un ou plusieurs des atomes d'hydrogène sont remplacés par un atome d'halogène, contenant 1 à 20 atomes de carbone, des radicaux métalliques (organométalloïdiques) à substituants hydrocarbyle dont chaque substitution hydrocarbyle contient 1 à 20 atomes de carbone et le métal en question appartient au Groupe IV-A du Tableau Périodique des Eléments.

3. Utilisation suivant la revendication 1, dans laquelle l'anion contient une substitution perfluoro.

4. Utilisation suivant la revendication 3, dans laquelle l'anion est le tétrakis(pentafluorophényl)bore.